# EUROPEAN PATENT SPECIFICATION

(11) **EP 2 811 550 B1**
(45) Date of publication and mention of the grant of the patent: **17.01.2018**
(21) Application number: 13743209.2
(22) Date of filing: 01.02.2013
(51) Int. Cl.: H01M 4/02, H01M 4/62, H01M 10/0525, H01M 4/13, C09D 11/00

(54) **COMPOSITION FOR FORMING SECONDARY CELL ELECTRODE, SECONDARY CELL ELECTRODE, AND SECONDARY CELL**
ZUSAMMENSETZUNG ZUR FORMUNG EINER SEKUNDÄRZELLENELEKTRODE, SEKUNDÄRZELLENELEKTRODE UND SEKUNDÄRZELLE
COMPOSITION POUR FORMER UNE ÉLECTRODE DE PILE RECHARGEABLE, ÉLECTRODE DE PILE RECHARGEABLE ET PILE RECHARGEABLE

(30) Priority: 02.02.2012 JP 2012020475
(43) Date of publication of application: 10.12.2014
(73) Proprietor: Toyo Ink SC Holdings Co., Ltd., Tokyo 104-8377 (JP)
(72) Inventor: MOROISHI, Yasuyuki, Tokyo 104-8377 (JP); HARUTA, Issey, Tokyo 104-8377 (JP); HATEMATA, Akihiko, Tokyo 104-8377 (JP)
(74) Representative: Maiwald Patentanwalts GmbH
(86) International application number: PCT/JP2013/052360
(87) International publication number: WO 2013/115368

(56) References cited:
- EP-A1- 2 306 563
- WO-A1-2010/123137
- JP-A- H11 283 630
- JP-A- H11 283 630
- JP-A- 2006 054 096
- JP-A- 2010 529 608
- JP-A- 2011 071 047
- JP-A- 2012 033 364
- JP-A- 2012 089 411
- US-A1- 2012 003 540

## Description

### Technical Field

The present invention relates to a secondary cell electrode-forming composition, an electrode produced with the composition, and a secondary cell produced with the electrode.

### Background Art

Now, small portable electronic devices such as digital cameras and cellular phones are widely used. Such electronic devices are always required to have a minimum volume and a lighter weight. Therefore, batteries to be installed in such devices are also required to have a smaller size, a lighter weight, and a higher capacity. Concerning secondary cells to be installed in automobiles, conventional lead storage batteries are required to be replaced with new types of large secondary cells.

To meet such requirements, secondary cells such as lithium ion secondary cells and alkaline secondary cells have been aggressively developed, and ink compositions for use in forming electrodes have also been aggressively developed. At the same time, attention is being focused on an underlayer-forming composition for use in forming an underlayer for a composite layer.

Important properties required for an ink composition or an underlayer-forming composition for use in forming an electrode include uniformity with which an active material or a conductive aid is adequately dispersed, and flexibility and adhesion of the electrode formed by drying the ink composition or the underlayer-forming composition.

The state of dispersion of an active material or a conductive aid in the ink composition or the state of dispersion of a conductive aid in the underlayer-forming composition is correlated with the state of distribution of the active material or the conductive aid in the resulting composite layer or correlated with the state of distribution of the conductive aid in the resulting underlayer, and can influence the physical properties of the resulting electrode and thus influence the performance of the resulting cell.

Therefore, how to disperse an active material or a conductive aid is an important aspect. In particular, highly conductive carbon materials (conductive aid) have a large structure or specific surface area and thus strong cohesion, and it is difficult to uniformly mix and disperse such carbon materials in an ink composition or an underlayer-forming composition.

When the dispersibility or particle size of such carbon materials as a conductive aid is insufficiently controlled, a problem occurs in that a uniform conductivc network cannot be formed, so that the resulting electrode cannot have lower internal resistance and thus the electrode material cannot provide sufficient performance.

If not only a conductive aid but also an active material are insufficiently dispersed in an ink composition, partial aggregation can occur in a composite layer made from such an ink composition. The partial aggregation can also cause an electrode resistance distribution, so that current concentration can occur in the resulting cell during use, which may cause problems such as partial heat generation and accelerated degradation.

The ink composition or the underlayer-forming composition is required to have adequate fluidity so that it can be applied to the surface of a metal foil serving as a collector. In addition, the ink composition or the underlayer-forming composition is required to have adequate viscosity so that a composite layer or an underlayer can be formed with a surface as flat as possible and with a uniform thickness from the composition.

On the other hand, after a composite layer or an underlayer is formed on a metal foil as a substrate from the ink composition or the underlayer-forming composition, the composite layer or the underlayer and the metal foil are often formed into pieces with the desired size and shape by cutting or punching. Therefore, the composite layer and the underlayer are required to have hardness, flexibility, and adhesion so that they can be prevented from being scratched, cracked, or peeled off during cutting or punching.

The flexibility and adhesion of the electrode are also important because they significantly influence the cell performance.

If the composite layer or the underlayer made from the ink composition or the underlayer-forming composition has low flexibility, it can be cracked. In the cracked electrode, the uniform conductive network is broken, so that the conductivity of the electrode decreases, which leads to cell life reduction.

If the electrode has low adhesion, the expansion and contraction of the active material, associated with the intercalation and deintercalation with lithium ions during the charge-discharge process, can cause breakage of the electrode structure and delamination of the electrode from the collector, which will lead to cell life reduction.

In particular, it is very difficult to impart flexibility to an electrode made from an ink composition or an underlayer-forming composition containing water as a medium.

Patent Literatures 1 to 4 disclose a process that includes mixing an active material and a conductive material, kneading the mixture with an aqueous solution of a cellulose-based thickener, then further adding an aqueous binder such as a polytetrafluoroethylene- or latex-based binder, and further kneading them to form an ink composition. Unfortunately, the following problem can occur. The resulting ink composition can have an insufficient dispersion state and can form an electrode with poor flexibility or adhesion, which is not the desired one and therefore cannot produce good cell performance.

Patent Literatures 5 to 7 disclose the studies mentioned below concerning adhesion.

Patent Literature 5 discloses an active material slurry for use in forming a lithium ion cell anode and a method for producing such a slurry, in which such a slurry is produced using a polar solvent such as N-methyl-2-pyrrolidone, alcohol, acetone, or water in combination with a nonpolar solvent such as cyclohexane, n-hexane, or benzene.

Patent Literature 6 discloses a method for manufacturing an electrode for use in a cell, which includes dispersing an active material with a water-soluble organic solvent such as an alcohol, N-methylpyrrolidone, or acetone, then adding water to the dispersion, and further adding a binder such as a styrene-butadiene copolymer to form a dispersion, and making an electrode from the dispersion.

Patent Literature 7 discloses a method for producing a slurry for use in forming a lithium ion cell anode, which includes adding N-methylpyrrolidone, a water-soluble organic compound, to a slurry containing water, a binder, and an electrode active material composed of graphite particles coated with an amorphous carbon material.

JP H11 283630 A relates to an electrode slurry, a binder composition, an electrode, and a battery of a lithium ion secondary battery.

EP 2 306 563 A1 relates to an anode composite for a nonaqueous electrolyte secondary cell, which comprises an electrode active material having a lithium intercalation-deintercalation potential higher by at least 0.4 V than the standard electrode potential of Li/Li⁺ , and a binder containing a fibrillated polytetrafluoroethylene and an amorphous resin.

WO 2010/123137 A1 provides a polar dispersion composition containing 0.5 to 30 parts by mass of an electroconductive carbon black and 0.1 to 30 parts by mass of a styrene-methoxy polyethylene glycol methacrylate copolymer, with respect to 100 parts by mass of the polar dispersion composition.

US 2012/003540 A1 discloses a method of manufacturing a positive electrode active material for lithium ion batteries, comprising: preparing a mixture containing (A) Li₃PO₄, or a Li source and a phosphoric acid source, (B) at least one selected from a group of an Fe source, a Mn source, a Co source and a Ni source, water and an aqueous organic solvent having a boiling point of 150 °C. or more, wherein the amounts of (A) and (B) in the mixture are adjusted to amounts necessary to manufacture therefrom LiMPO₄, wherein M represents at least one selected from the group of Fe, Mn, Co and Ni, at a concentration of 0.5 to 1.5 mol/L; and generating fine particles of LiMPO₄ having an average primary particle diameter of 30 to 80 nm by reacting (A) and (B) at a high temperature and high pressure.

However, these methods cannot sufficiently improve adhesion and need to be further improved. In addition, the flexibility of the resulting electrode is not sufficiently improved.

### Citation List

### Patent Literature

Patent Literature 1: JP H02-158055 A
Patent Literature 2: JP H09-082364 A
Patent Literature 3: JP 2003-142102 A
Patent Literature 4: JP 2010-165493 A
Patent Literature 5: JP H09-293498 A
Patent Literature 6: JP 2003-142082 A
Patent Literature 7: JP 2006-54096 A

### Summary of Invention

### Technical Problem

It is an object of the present invention to provide an electrode-forming composition that is suitable for use in forming a secondary cell with good charge-discharge cycle characteristics and can form an electrode containing a highly dispersed active material or conductive aid and having good flexibility and good adhesion.

### Solution to Problem

By using a water-soluble additive (C) selected from the group consisting of triethylene glycol monomethyl ether, diethylene glycol dimethyl ether, diethylene glycol diethyl ether, diethylene glycol ethyl methyl ether, diethylene glycol butyl methyl ether, dipropylene glycol dimethyl ether, triethylene glycol monoethyl ether, triethylene glycol monopropyl ether, triethylene glycol monobutyl ether, triethylene glycol dimethyl ether, triethylene glycol butyl methyl ether, tripropylene glycol monomethyl ether, tripropylene glycol dimethyl ether, tetraethylene glycol monomethyl ether, tetraethylene glycol monobutyl ether, tetraethylene glycol dimethyl ether, the present invention makes it possible to form an electrode with improved flexibility and adhesion without reducing the dispersibility of an electrode active material (A) or a carbon material (B) as a conductive aid.

Specifically, the present invention is directed to a secondary cell electrode-forming composition including: at least one of A) an electrode active material or B) a carbon material as a conductive aid; C) a water-soluble additive; and D) water, characterized in that the water-soluble additive C) is selected from the group consisting of: triethylene glycol monomethyl ether, diethylene glycol dimethyl ether, diethylene glycol diethyl ether, diethylene glycol ethyl methyl ether, diethylene glycol butyl methyl ether, dipropylene glycol dimethyl ether, triethylene glycol monoethyl ether, triethylene glycol monopropyl ether, triethylene glycol monobutyl ether, triethylene glycol dimethyl ether, triethylene glycol butyl methyl ether, tripropylene glycol monomethyl ether, tripropylene glycol dimethyl ether, tetraethylene glycol monomethyl ether, tetraethylene glycol monobutyl ether, tetraethylene glycol dimethyl ether.

The present invention is also directed to the secondary cell electrode-forming composition which contains 0.1 to 30% by weight of the water-soluble additive (C).

The present invention is also directed to an electrode for use in a secondary cell, including: a collector; and at least one of a composite layer made from the secondary cell electrode-forming composition or an electrode underlayer made from the secondary cell electrode-forming composition.

The present invention is also directed to a secondary cell including: a cathode; an anode; and an electrolytic solution, wherein at least one of the cathode or the anode is the electrode stated above for use in a secondary cell.

### Advantageous Effects of Invention

When the water-soluble additive according to the present invention is used, the active material or the carbon material as the conductive aid does not decrease in dispersibility in the resulting electrode-forming composition. Therefore, the electrode-forming composition containing the water-soluble additive can form a composite layer or an underlayer having good flexibility and good adhesion to a collector, which makes it possible to provide a secondary cell with good charge-discharge cycle characteristics.

### Best Mode for Carrying Out the Invention

### <Electrode for use in secondary cell>

An electrode for use in a secondary cell can be obtained by a variety of methods.

For example, the electrode can be obtained by forming a composite layer on the surface of a collector such as a metal foil using
(1) a composition in the form of an ink (hereinafter, referred to as an "ink composition") containing an active material and water,
(2) an ink composition containing an active material, a conductive aid, and water,
(3) an ink composition containing an active material, a binder, and water, or
(4) an ink composition containing an active material, a conductive aid, a binder, and water.

Alternatively, the electrode can be obtained by a process that includes forming an underlayer on the surface of a metal foil collector using an underlayer-forming composition containing a conductive aid and a liquid medium and then forming a composite layer on the underlayer using one of the ink compositions (1) to (4) or other ink compositions.

In any case, cell performance is influenced by the state of dispersion of the active material or the conductive aid and the flexibility or adhesion of the electrode as described in detail in the section titled "Background Art."

Thus, the secondary cell electrode-forming composition of the present invention is useful not only as an ink composition containing an active material as an essential component but also as an underlayer-forming composition not necessarily containing an active material.

### <Water-soluble additive (C)>

Therefore, first, the water-soluble additive (C) selected from the group consisting of triethylene glycol monomethyl ether, diethylene glycol dimethyl ether, diethylene glycol diethyl ether, diethylene glycol ethyl methyl ether, diethylene glycol butyl methyl ether, dipropylene glycol dimethyl ether, triethylene glycol monoethyl ether, triethylene glycol monopropyl ether, triethylene glycol monobutyl ether, triethylene glycol dimethyl ether, triethylene glycol butyl methyl ether, tripropylene glycol monomethyl ether, tripropylene glycol dimethyl ether, tetraethylene glycol monomethyl ether, tetraethylene glycol monobutyl ether, tetraethylene glycol dimethyl ether for use in the present invention (hereinafter abbreviated as the "water-soluble additive (C)") will be described.

In the present invention, the water-soluble additive (C) is a material that can be dissolved in water without being separated or precipitated when 1 g of it is added to 99 g of water at 25°C, stirred, and allowed to stand at 25°C for 24 hours.

The addition of the water-soluble additive (C) makes it possible to reduce the curing-induced shrinkage of the secondary cell electrode-forming composition during drying. If the composite layer or the underlayer is easily cracked by curing-induced shrinkage during drying, not only the electrode can be difficult to handle, but also the uniform conductive network can be broken in the resulting electrode, which can cause a reduction in the conductivity of the electrode and a reduction in cell life. It is also concluded that when curing-induced shrinkage is reduced during drying, the adhesion to the collector can also be improved.

It is also important that the water-soluble additive (C) not only has an effect on surface tension but also does not reduce the dispersibility of the active material or the conductive aid. If the active material or a carbon material as the conductive aid is insufficiently dispersed, not only the flexibility or adhesion of the electrode can be degraded, but also there can be an adverse effect on charge-discharge characteristics.

Therefore, the present invention uses the water-soluble additive (C) selected from the group consisting of triethylene glycol monomethyl ether, diethylene glycol dimethyl ether, diethylene glycol diethyl ether, diethylene glycol ethyl methyl ether, diethylene glycol butyl methyl ether, dipropylene glycol dimethyl ether, triethylene glycol monoethyl ether, triethylene glycol monopropyl ether, triethylene glycol monobutyl ether, triethylene glycol dimethyl ether, triethylene glycol butyl methyl ether, tripropylene glycol monomethyl ether, tripropylene glycol dimethyl ether, tetraethylene glycol monomethyl ether, tetraethylene glycol monobutyl ether, tetraethylene glycol dimethyl ether.

These water-soluble additives (C) may be used singly or in combination of two or more.

The content of the water-soluble additive (C) is preferably from 0.1 to 30% by weight, more preferably from 0.1 to 15% by weight, based on 100% by weight of the secondary cell electrode-forming composition. Within such ranges, an optimum balance can be achieved between the influence of the additive on the dispersion of the active material or the conductive aid and the effect of the additive on the flexibility or adhesion. If the content is less than 0.1% by weight, the effect of improving the flexibility or adhesion may fail to be achieved. If the content is more than 30% by weight, the additive may have an adverse effect on the dispersion of the active material or the conductive aid.

### <Ink composition>

As mentioned above, the secondary cell electrode-forming composition of the present invention may be used as an ink composition or an underlayer-forming composition.

Therefore, the ink composition will be described as a preferred mode of the secondary cell electrode-forming composition of the present invention, which contains the active material as an essential component. The ink composition may be a cathode-forming ink composition or an anode-forming ink composition. As described above, each composition may be any of different compositions (1) to (4) below.
(1) An ink composition containing the active material (A), the water-soluble additive (C), and water (D).
(2) An ink composition further containing the conductive aid (B) in addition to the components of the composition (1).
(3) An ink composition further containing a binder in addition to the components of the composition (1).
(4) An ink composition further containing the conductive aid (B) and a binder in addition to the components of the composition (1).

### <Cathode active materials for use in lithium ion secondary cells>

Cathode active materials for use in lithium ion secondary cells may be metal oxides, metal compounds such as metal sulfides, and conductive polymers, which are capable of being doped or intercalated with lithium ions.

Examples include oxides of transition metals such as Fe, Co, Ni, and Mn, lithium-containing complex oxides, and inorganic compounds such as transition metal sulfides. Specific examples include powders of transition metal oxides such as MnO, V₂O₅, V₆O₁₃, and TiO₂, powders of lithium transition metal complex oxides such as lithium nickelate, lithium cobaltate, and lithium manganate of layered structure, and lithium manganate of spinel structure, phosphate compounds of olivine structure, such as iron lithium phosphate materials, and powders of transition metal sulfides such as TiS₂ and FeS.

Conductive polymers such as polyaniline, polyacetylene, polypyrrole, and polythiophene may also be used. A mixture of any of the inorganic compounds and any of the organic compounds may also be used.

### <Anode active materials for use in lithium ion secondary cells>

Anode active materials for use in lithium ion secondary cells may be of any type capable of being doped or intercalated with lithium ions. Examples include metal Li, alloys thereof such as tin alloys, silicon alloys, and lead alloys, metal oxides such as LiₓFe₂O₃, LiₓFe₃O₄, LiₓWO₂, lithium titanate, lithium vanadate, and lithium silicate, conductive polymers such as polyacetylene and poly-p-phenylene, amorphous carbonaceous materials such as soft carbon and hard carbon, carbonaceous powder such as artificial graphite such as a highly graphitized carbon material, or natural graphite, and carbon materials such as carbon black, mesophase carbon black, carbon materials produced by baking resin, vapor-deposited carbon fibers, and carbon fibers. These anode active materials may be used singly or in combination of two or more.

### <Cathode and anode active materials for use in alkaline secondary cells>

Cathode and anode active materials for use in alkaline secondary cells such as nickel-hydrogen secondary cells may also be appropriately selected from those conventionally known in the art.

Cathode and anode active materials for use in nickel-hydrogen secondary cells may be appropriately selected from those conventionally known in the art. For example, such cathode active materials are nickel compounds such as nickel hydroxide, nickel oxyhydroxide, and nickel oxide. Hydrogen storage alloys may be used as anode active materials, examples of which include AB5-type (rare earth metal) alloys such as LaNi5, AB/A2B-type (titanium) alloys such as Tini and Ti2Ni, and ZrNi alloys, and MgNi alloys. Other examples include MnNi2Co3, MmNi4Co and others derived from LaNi5 by replacing La with a misch metal Mm and partially replacing Ni with Mn or Co and alloys with a composition of Mm(such as Ni,Mn,Co)m(such as Al,Cr)n derived from the above by further adding Al.

### <Electrode active material (A)>

The electrode active material (A) may be the cathode or anode active material described above. The electrode active material (A) preferably has a size in the range of 0.05 to 100 µm, more preferably in the range of 0.1 to 50 µm. In the ink composition, the electrode active material (A) preferably has a dispersed particle size of 0.5 to 20 µm. As used herein, the term "dispersed particle size" refers to the particle size (D50) at which 50% of the population of particles are smaller and 50% of the population of particles are larger in the volume particle size distribution. The dispersed particle size can be determined using, for example, a common particle size analyzer such as a dynamic light scattering particle size analyzer (Microtrac UPA manufactured by NIKKISO CO., LTD).

### <Carbon material (B) as conductive aid>

Next, the carbon material (B) as the conductive aid will be described.

In the present invention, the carbon material (B) as the conductive aid may be of any type as long as it is a carbon material having conductivity. Examples include graphite, carbon black, conductive carbon fibers (carbon nanotubes, carbon nanofibers, carbon fibers), and fullerene, which may be used singly or in combination of two or more. Carbon black is preferably used in view of conductivity, easy availability, and cost.

There are various types of carbon black such as furnace black produced by continuous pyrolysis of a gaseous or liquid raw material in a reaction furnace, Ketjen black produced especially using ethylene heavy oil as a raw material, channel black produced by burning raw material gas and bringing the flame into contact with the bottom of a steel channel to rapidly cool and precipitate the product, thermal black obtained by periodically repeating combustion and pyrolysis of raw material gas, and acetylene black produced especially using acetylene gas as a raw material, which may be used singly or in combination of two or more. Carbon black or hollow carbon having undergone a conventional oxidation treatment may also be used.

The oxidation treatment of carbon is a treatment that is performed to directly introduce (covalently bond) an oxygen-containing polar functional group such as a phenol, quinone, carboxyl, or carbonyl group onto the surface of carbon by treating carbon at high temperature in the air or secondarily treating carbon with nitric acid, nitrogen dioxide, ozone, or other materials. The oxidation treatment of carbon is generally performed to improve the dispersibility of carbon. In general, however, as the amount of the introduced functional group increases, the conductivity of carbon decreases. Therefore, it is preferable to use carbon not having undergone the oxidation treatment.

As the specific surface area of the carbon black used increases, the number of contact points between the carbon black particles increase, which is advantageous in reducing the internal resistance of the electrode. Specifically, the carbon black to be used preferably has a specific surface area (BET) of 20 m²/g to 1,500 m²/g, more preferably 50 m²/g to 1,500 m²/g, even more preferably 100 m²/g to 1,500 m²/g, as determined from the amount of nitrogen adsorption. If carbon black with a specific surface area of less than 20 m²/g is used, it may be difficult to obtain sufficient conductivity. Carbon black with a specific surface area of more than 1,500 m²/g may be difficult to obtain commercially.

The primary particle size of the carbon black used is preferably from 0.005 to 1 µm, more preferably from 0.01 to 0.2 µm. As used herein, the term "primary particle size" refers to the average of particle sizes measured with an electron microscope.

The carbon material (B) as the conductive aid in the ink composition is preferably in the form of fine particles with a dispersed particle size of 0.03 µm to 5 µm. A composition containing the carbon material as the conductive aid with a dispersed particle size of less than 0.03 µm may be difficult to produce. If a composition containing the carbon material as the conductive aid with a dispersed particle size of more than 5 µm is used, some problems may occur, such as uneven distribution of the material in the composite coating and uneven distribution of electrode resistance.

As used herein, the term "dispersed particle size" refers to the particle size (D50) at which a cumulated volume rate is 50% if the volume rate of particles is accumulated in order from one with the smallest particle size in the volume particle size distribution. The dispersed particle size can be determined using, for example, a common particle size analyzer such as a dynamic light scattering particle size analyzer (Microtrac UPA manufactured by NIKKISO CO., LTD).

Examples of commercially available carbon black include TOKABLACK #4300, #4400, #4500, or #5500 (furnace black, manufactured by Tokai Carbon Co., Ltd.), Printex L (furnace black, manufactured by Degussa), Raven 7000, 5750, 5250, 5000 Ultra III, or 5000 Ultra, Conductex SC Ultra or Conductex 975 Ultra, PUER BLACK 100, 115, or 205 (furnace black, manufactured by Columbian Chemicals Company), #2350, #2400B, #2600B, #30050B, #3030B, #3230B, #3350B, #3400B, or #5400B (furnace black, manufactured by Mitsubishi Chemical Corporation), MONARCH 1400, 1300, or 900, Vulcan XC-72R, or Black Pearls 2000 (furnace black, manufactured by Cabot Corporation), Ensaco 250G, Ensaco 260G, Ensaco 350G, or Super P-Li (manufactured by TIMCAL GRAPHITE & CARBON), Ketjen Black EC-300J or EC-600JD (manufactured by Akzo Nobel), and DENKA BLACK, DENKA BLACK HS-100 or FX-35 (acetylene black, manufactured by DENKI KAGAKU KOGYO KABUSHIKI KAISHA). Examples of graphite include artificial graphite and natural graphite such as scaly graphite, lump graphite, or earthy graphite. These may also be used in combination of two or more.

Conductive carbon fibers obtained by baking petroleum-derived raw materials are preferably used, and those obtained by baking plant-derived raw materials may also be used. Examples include VGCF, which is produced from petroleum-derived raw materials by Showa Denko K.K.

### <Binder>

The ink composition may further contain a binder.

In the present invention, the binder is used to bind particles of the conductive aid or other active materials. The binder is less effective in dispersing these particles in a solvent.

Examples of the binder include acrylic resin, polyurethane resin, polyester resin, phenolic resin, epoxy resin, phenoxy resin, urea resin, melamine resin, alkyd resin, formaldehyde resin, silicone resin, fluororesin, cellulose resin such as carboxymethylcellulose, synthetic rubbers such as styrene-butadiene rubber and fluororubber, conductive resins such as polyaniline and polyacethylene, and fluorine atom-containing polymer compounds such as polyvinylidene fluoride, polyvinyl fluoride, and tetrafluoroethylene. Modifications, blends, or copolymers of these reins may also be used. These binders may be used singly or in combination of two or more.

The binder is preferably in a water medium. The binder in a water medium may be a water-soluble binder, an emulsion-type binder, a hydrosol-type binder which may be selected as desired.

### <Preparation of the ink composition>

If necessary, a film-forming aid, an antifoaming agent, a leveling agent, an antiseptic, a pH adjuster, a viscosity modifier may also be added to the ink composition.

When having a solid content in the range of 30 to 90% by weight, the ink composition preferably has a viscosity of 100 mPa·s to 30,000 mPa·s although it depends on the method of application of it.

The composition preferably contains the active material (A) as much as possible as long as its viscosity falls within the range where it can be applied. For example, the content of the active material (A) in the solids of the ink composition is preferably from 80% by weight to 99% by weight.

When the ink composition contains the conductive aid (B), the content of the conductive aid (B) in the solids of the ink composition is preferably from 0.1 to 15% by weight.

When the ink composition contains the binder, the content of the binder in the solids of the ink composition is preferably from 0.1 to 15% by weight.

The ink composition described above can be obtained by various methods such as those shown below.

The ink composition will be described with reference to examples of the ink composition (4) containing the active material (A), the conductive aid (B), the water-soluble additive (C), the binder, and water (D).
(4-1) The ink composition can be obtained by a process that includes forming an aqueous active material dispersion containing the active material (A), the water-soluble additive (C), and water (D) and then adding the conductive aid (B) and the binder to the aqueous dispersion. The conductive aid (B) and the binder may be added at the same time. Alternatively, the binder may be added after the conductive aid (B) is added, and vice versa.
(4-2) The ink composition can be obtained by a process that includes forming an aqueous conductive aid dispersion containing the conductive aid (B), the water-soluble additive (C), and water (D) and then adding the active material (A) and the binder to the aqueous dispersion. The active material (A) and the binder may be added at the same time. Alternatively, the binder may be added after the active material (A) is added, and vice versa.
(4-3) The ink composition can be obtained by a process that includes forming an aqueous active material dispersion containing the active material (A), the water-soluble additive (C), the binder, and water (D) and then adding the conductive aid (B) to the aqueous dispersion.
(4-4) The ink composition can be obtained by a process that includes forming an aqueous conductive aid dispersion containing the conductive aid (B), the water-soluble additive (C), the binder, and water (D) and then adding the active material (A) to the aqueous dispersion.
(4-5) The ink composition can be obtained by a process that includes forming an aqueous dispersion containing the active material (A), the conductive aid (B), and water (D) and then adding the water-soluble additive (C) and the binder to the dispersion.
(4-6) The ink composition can be obtained by mixing the active material (A), the conductive aid (B), the water-soluble additive (C), the binder, and water (D) almost at the same time.

### <Disperser and mixer>

The apparatus for use in forming the ink composition may be a disperser and/or a mixer commonly used in dispersing pigments or other processes.

Examples include mixers such as dispersers, homo mixers, or planetary mixers; homogenizers such as CLEARMIX manufactured by M Technique Co., Ltd. or FILMIX manufactured by PRIMIX Corporation; media-type dispersers such as paint conditioners (manufactured by Red Devil Equipment Company), ball mills, sand mills (such as DYNO-MILL manufactured by SHINMARU ENTERPRISES CORPORATION), attritors, pearl mills (such as DCP Mill manufactured by Eirich), or co-ball mills; wet jet mills (such as Genus PY manufactured by Genus Co., Ltd., Star Burst manufactured by Sugino Machine Limited, and Nanomizer manufactured by NANOMIZER Inc.), medialess dispersers such as CLEAR SS-5 manufactured by M Technique Co., Ltd. or MICROS manufactured by Nara Machinery Co., Ltd., and others such as roll mills. The disperser to be used preferably has undergone a treatment for preventing contamination with metal from the disperser.

For example, when a media-type disperser is used in the process, the disperser preferably has a ceramic or resin agitator and a ceramic or resin vessel, or the disperser preferably has a metallic agitator and a vessel whose surface has undergone tungsten carbide spray coating or resin coating. In addition, glass beads or ceramic beads such as zirconia or alumina beads are preferably used as media. When a roll mill is used, ceramic rolls are preferably used. One or more dispersers may be used singly or in combination. When the cathode or anode active material particles can easily crack or break on strong impact, a medialess disperser such as a roll mill or a homogenizer is more preferred than a media-type disperser.

### <Underlayer-forming composition>

As mentioned above, the secondary cell electrode-forming composition of the present invention may be used not only as the ink composition but also as the underlayer-forming composition.

The underlayer-forming composition contains the conductive aid (B), the water-soluble additive (C), and water (D). It may also contain the binder. Each of the components may be the same as in the ink composition.

The content of the carbon material (B) as the conductive aid in the total solids of the composition used to form the electrode underlayer is preferably from 5% by weight to 95% by weight, more preferably from 10% by weight to 90% by weight. If the content of the carbon material (B) as the conductive aid is low, the underlayer may fail to ensure conductivity. On the other hand, if the content of the carbon material (B) as the conductive aid is too high, the coating may have lower durability. In general, the appropriate viscosity of the electrode underlayer-forming ink composition is preferably from 10 mPa·s to 30,000 mPa·s although it depends on the method of application of the electrode underlayer-forming ink composition.

### <Electrode>

When used as the ink composition, the secondary cell electrode-forming composition of the present invention may be applied to a collector and then dried to form a composite layer as a secondary cell electrode.

Alternatively, when used as the underlayer-forming composition, the secondary cell electrode-forming composition of the invention may be applied to a collector to form an underlayer, on which a composite layer may be formed so that a secondary cell electrode can be obtained. One of the ink compositions (1) to (4) of the invention or any other ink composition may be used to form the composite layer on the underlayer.

### <Collector>

The collector used to form the electrode may be of any material or shape. The material or shape for the collector may be appropriately selected from those suitable for a variety of secondary cells.

For example, the collector may be made of aluminum, copper, nickel, titanium, stainless steel, or other metals or alloys. In the case of a lithium ion cell, aluminum and copper are particularly preferred as cathode and anode materials, respectively.

A general form of the collector is a foil on a flat sheet. Alternatively, a collector with a roughened surface, a perforated foil collector, or a mesh collector may also be used.

Any method known in the art may be used to apply the ink composition or the underlayer-forming composition to the collector.

Specifically, the application method may be die coating, dip coating, roll coating, doctor coating, knife coating, spray coating, gravure coating, screen printing, or electrostatic coating. The drying process may be performed using air drying, a fan dryer, a warm-air dryer, an infrared heater, a far infrared heater, or any other means.

After the application, planographic press or rolling with calender rolls or other means may also be performed. The electrode composite layer generally has a thickness of 1 µm to 500 µm, preferably 10 µm to 300 µm. When the underlayer is provided, the total thickness of the underlayer and the composite layer is generally from 1 µm to 500 µm, preferably from 10 µm to 300 µm.

### <Secondary cell>

The secondary cell can be formed using the above electrode as at least one of the cathode and the anode.

Examples of the secondary cell include lithium ion secondary cells, alkaline secondary cells, lead storage batteries, sodium-sulfur secondary cells, lithium-air secondary cells, etc. Electrolytic solutions, separators, and other components known in the art for each type of secondary cell may be appropriately used.

### < Electrolytic solution>

The electrolytic solution will be described with reference to the case of a lithium ion secondary cell as an example. A solution of a lithium-containing electrolyte in a non-aqueous solvent may be used as the electrolytic solution.

Examples of the electrolyte include LiBF₄, LiClO₄, LiPF₆, LiAsF₆, LiSbF₆, LiCF₃SO₃, Li(CF₃SO₂)₂N, LiC₄F₉SO₃, Li(CF₃SO₂)₃C, LiI, LiBr, LiCl, LiAlCl, LiHF₂, LiSCN, and LiBPh₄.

Examples of the non-aqueous solvent include carbonates, lactones, glymes, esters, sulfoxides, and nitriles.

Examples of carbonates include ethylene carbonate, propylene carbonate, butylene carbonate, dimethyl carbonate, ethyl methyl carbonate, and diethyl carbonate.

Examples of lactones include γ-butyrolactone, γ-valerolactone, and γ-octanoic lactone.

Examples of glymes include tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane.

Examples of esters include methyl formate, methyl acetate, and methyl propionate.

Examples of sulfoxides include dimethyl sulfoxide and sulfolane.

Examples of nitriles include acetonitrile.

These solvents may be used singly or in combination of two or more.

The electrolytic solution may also be contained in a polymer matrix, and the resulting gel may be used as a polyelectrolyte. Examples of the polymer matrix include acrylate resin having a polyalkylene oxide segment, polyphosphazen resin having a polyalkylene oxide segment, and polysiloxane having a polyalkylene oxide segment.

### <Separator>

Examples of the separator include a polyethylene nonwoven fabric, a polypropylene nonwoven fabric, a polyamide nonwoven fabric, and hydrophilic modifications thereof.

### <Cell structure and configuration>

The lithium ion secondary cell produced with the composition of the present invention may have any structure. The lithium ion secondary cell generally includes a cathode, an anode, and an optional separator. The lithium ion secondary cell may be in various forms such as a sheet form, a cylindrical form, a button form, and a laminate form, depending on the intended use.

### Examples

Hereinafter, the present invention will be more specifically described with reference to examples, which, however, are not intended to limit the scope of the present invention in any respect. Unless otherwise specified, the term "parts" in the examples and the comparative examples means "parts by weight."

### [Example 1]

To a mixer were added 45 parts of LiFePO₄ as a cathode active material, 2.5 parts of acetylene black (DENKA BLACK HS-100) as a carbon material serving as a conductive aid, and 50 parts (containing 1 part of solid) of an aqueous solution of 2% by weight carboxymethylcellulose and mixed. To the mixer were further added 2 parts of a water-soluble additive MTG (triethylene glycol monomethyl ether) and 2.5 parts of a binder (polytetrafluoroethylene 30-J manufactured by Du Pont-Mitsui Fluorochemicals Company, Ltd., a 60% aqueous dispersion) and mixed. The mixture was adjusted so as to have a final solid content of about 50% by weight, so that a secondary cell cathode-forming ink composition was obtained. The degree of dispersion of the secondary cell cathode-forming ink composition was determined by the method described below.

The secondary cell cathode-forming ink composition was applied to a 20-µm-thick aluminum foil as a collector using a doctor blade. The composition was then dried by heating under reduced pressure so that a 100-µm-thick electrode could be formed. The flexibility of the resulting electrode was evaluated by the method described below.

The electrode was further rolled with a roll press to form an 85-µm-thick cathode. The adhesion of the electrode was evaluated by the method described below.

The resulting cathode was then formed, by punching, into a 16 mm diameter piece for use as a working electrode. A coin-shaped cell was formed, which included the working electrode, a metal lithium foil counter electrode, a separator (porous polypropylene film) between the working electrode and the counter electrode, and an electrolytic solution (a non-aqueous electrolytic solution obtained by dissolving 1 M of LiPF₆ in a mixed solvent of ethylene carbonate and diethyl carbonate in a ratio (volume ratio) of 1 : 1). The coin-shaped cell was formed in an argon gas filled glove box. After prepared, the coin-shaped cell was subjected to the cell characteristic evaluation (charge-discharge cycle characteristic evaluation) described below.

### [Examples 6 and 8] and [Comparative Examples 2' to 5', 7', 9' and 1 to 10]

Secondary cell cathode-forming ink compositions and cathodes were each obtained using the same procedure as in Example 1 and evaluated in the same manner, except that the active material, the carbon material as a conductive aid, and the water-soluble additive shown in Table 1 were used. In the process, the secondary cell cathode-forming ink composition was prepared so as to have a final solid content of about 50% by weight also when LCO, LMO, or NMC was used as the active material.

### [Example 19]

To a mixer were added 45 parts of LiFePO₄ as a cathode active material, 2.5 parts of acetylene black (DENKA BLACK HS-100) as a carbon material serving as a conductive aid, and 50 parts (containing 1 part of solid) of an aqueous solution of 2% by weight carboxymethylcellulose and mixed. To the mixer were further added 0.25 parts of a water-soluble additive MTG and 2.5 parts of a binder (polytetrafluoroethylene 30-J manufactured by Du Pont-Mitsui Fluorochemicals Company, Ltd., a 60% aqueous dispersion) and mixed. The mixture was adjusted so as to have a final solid content of about 50% by weight, so that a secondary cell cathode-forming ink composition was obtained.

The secondary cell cathode-forming ink composition was applied to a 20-µm-thick aluminum foil as a collector using a doctor blade. The composition was then dried by heating under reduced pressure so that a 100-µm-thick electrode could be formed. The flexibility of the resulting electrode was evaluated by the method described below.

The electrode was further rolled with a roll press to form an 85-µm-thick cathode. The adhesion of the electrode was evaluated by the method described below.

The resulting cathode was then formed, by punching, into a 16 mm diameter piece for use as a working electrode. A coin-shaped cell was formed, which included the working electrode, a metal lithium foil counter electrode, a separator (porous polypropylene film) between the working electrode and the counter electrode, and an electrolytic solution (a non-aqueous electrolytic solution obtained by dissolving 1 M of LiPF₆ in a mixed solvent of ethylene carbonate and diethyl carbonate in a ratio (volume ratio) of 1 : 1). The coin-shaped cell was formed in an argon gas filled glove box. After prepared, the coin-shaped cell was subjected to the cell characteristic evaluation (charge-discharge cycle characteristic evaluation) described below.

### [Comparative Example 20]

A secondary cell cathode-forming ink composition was obtained using the same procedure as in Example 19, except that PEO 2000 (Polyethylene Glycol 2000 manufactured by Wako Pure Chemical Industries, Ltd.) was used instead as the water-soluble additive. The cathode was evaluated as in Example 19.

### [Comparative Example 20']

A cathode was obtained and evaluated as in Example 19, except that the secondary cell cathode-forming ink composition was obtained by adding 45 parts of LiMn₂O₄ as a cathode active material, 2 parts of acetylene black (DENKA BLACK HS-100) as a carbon material serving as a conductive aid, 0.5 parts of carbon nanotubes (VGCF-H manufactured by Showa Denko K.K.), and 50 parts (containing 1 part of solid) of an aqueous solution of 2% by weight carboxymethylcellulose to a mixer, mixing them, further adding 10 parts of a water-soluble additive PD (1,3-propanediol) and 2.5 parts of a binder (polytetrafluoroethylene 30-J manufactured by Du Pont-Mitsui Fluorochemicals Company, Ltd., a 60% aqueous dispersion) to the mixer, and mixing them.

### [Comparative Example 21]

A secondary cell cathode-forming ink composition was obtained as in Comparative Example 20', except that ethanol was used instead as the water-soluble additive. The cathode was evaluated as in Example 19.

### [Example 21]

A cathode was obtained and evaluated as in Example 19, except that the secondary cell cathode-forming ink composition was obtained by adding 45 parts of LiFePO₄ as a cathode active material, 2.5 parts of acetylene black (DENKA BLACK HS-100) as a carbon material serving as a conductive aid, and 50 parts (containing 1 part of solid) of an aqueous solution of 2% by weight carboxymethylcellulose to a mixer, mixing them, further adding 30 parts of a water-soluble additive MTG and 2.5 parts of a binder (polytetrafluoroethylene 30-J manufactured by Du Pont-Mitsui Fluorochemicals Company, Ltd., a 60% aqueous dispersion) to the mixer, and mixing them.

### [Comparative Example 22]

A secondary cell cathode-forming ink composition was obtained using the same procedure as in Example 21, except that PEO 2000 was used instead as the water-soluble additive. The cathode was evaluated as in Example 19.

**[Table 1]**

| | Secondary cell cathode-forming ink composition | | | Grind gauge (um) | Flexibility | Adhesion | Charge-discharge Cycle Characteristic evaluation |
|---|---|---|---|---|---|---|---|
| | Active material | Carbon material as conductive aid | Water Soluble additive | | | | |
| Example 1 | LFP | A | MTG | 30 | ○ | ○ | ○ |
| Comparative Example 2' | LFP | F | SDE | 35 | ○ | ○Δ | ○Δ |
| Comparative Example 3' | LFP | A | PD | 35 | ○ | ○ | ○Δ |
| Comparative Example 4' | LFP | A | BL | 30 | ○ | ○ | ○ |
| Comparative Example 5' | LCO | A | PD | 30 | ○ | ○ | ○ |
| Example 6 | LMO | F | MTG | 35 | ○ | ○ | ○Δ |
| Comparative Example 7' | LMO | A | CBA | 30 | ○ | ○ | ○Δ |
| Example 8 | NMC | A | MTG | 35 | ○ | ○ | ○ |
| Comparative Example 9' | NMC | F | PD | 30 | ○ | ○ | ○Δ |
| Example 19 | LFP | A | MTG | 35 | ○ | ○ | ○ |
| Comparative Example 20' | LMO | A,C | PD | 30 | ○ | ○ | ○ |
| Example 21 | LFP | A | MTG | 35 | ○ | ○Δ | ○Δ |
| Comparative Example 1 | LFP | A | - | 35 | × | Δ | Δ |
| Comparative Example 2 | LCO | A | - | 35 | × | Δ | Δ |
| Comparative Example 3 | LMO | A | - | 40 | × | Δ | Δ |
| Comparative Example 4 | NMC | A | - | 35 | × | Δ | Δ |
| Comparative Example 5 | LFP | A | NMP | 45 | Δ | Δ | Δ |
| Comparative Example 6 | LFP | F | NMP | 40 | Δ | Δ | Δ |
| Comparative Example 7 | LFP | A | PEO 2000 | 75 | × | × | Δ |
| Comparative Example 8 | LMO | A | n-butanol | 100 | × | × | × |
| Comparative Example 9 | NMC | F | PEO 1500 | 75 | × | × | Δ |
| Comparative Example 10 | NMC | A | Ethanol | 70 | × | × | Δ |
| Comparative Example 20 | LFP | A | PEO 2000 | 70 | × | × | Δ |
| Comparative Example 21 | LMO | A,C | Ethanol | 100 | × | × | Δ |
| Comparative Example 22 | LFP | A | PEO 2000 | 70 | × | × | Δ |

LCO: LiCoO₂
LFP: LiFePO₄
LMO: LiMn₂O₄
NMC: LiNi1/3Mn1/3Co1/3O₂
A: Acetylene black, DENKA BLACK HS-100 (manufactured by DENKI KAGAKU KOGYO KABUSHIKI KAISHA)
F: Furnace black, Super P-Li (manufactured by TIMCAL GRAPHITE & CARBON)
C: Carbon nanotubes, VGCF-H (manufactured by Showa Denko K.K.)
MTG: Triethylene glycol monomethyl ether
SDE: Succinic acid diethanol
PD: 1,3-propanediol
BL: γ-butyrolactone
CBA: Diethylene glycol monoethyl ether acetate
NMP: N-methylpyrrolidone
PEO 2000: Polyethylene glycol 2000 (having 40 oxygen atoms per molecule, manufactured by Wako Pure Chemical Industries, Ltd.)
PEO 1500: Polyethylene glycol 1500 (having 30 oxygen atoms per molecule, manufactured by Wako Pure Chemical Industries, Ltd.)

### [Comparative Example 10']

To a mixer were added 48 parts of artificial graphite as an anode active material and 25 parts (containing 0.5 parts of solid) of an aqueous solution of 2% by weight hydroxyethyl cellulose and mixed. To the mixer were further added 5 parts of a water-soluble additive CBA (diethylene glycol monoethyl ether acetate), 18.2 parts of water, and 3.75 parts of a binder (an aqueous dispersion of 40% styrene-butadiene-based latex (SBR)) and mixed. The mixture was adjusted so as to have a final solid content of 50% by weight, so that a secondary cell anode-forming ink composition was obtained. The secondary cell anode-forming ink composition was applied to a 20-µm-thick copper foil as a collector using a doctor blade. The composition was then dried by heating under reduced pressure so that an 80-µm-thick electrode could be formed. The electrode was further rolled with a roll press to form a 70-µm-thick anode. The anode was evaluated in the same way as described above.

### [Examples 11 and 12] and [Comparative Examples 13' and 11 to 14]

Secondary cell anode-forming ink compositions and anodes were each obtained and evaluated as in Comparative Example 10', except that the active material, the carbon material as a conductive aid, and the additive shown in Table 2 were used.

### [Comparative Example 14']

To a mixer were added 90 parts of Li₄Ti₅O₁₂ as an anode active material, 5 parts of acetylene black (DENKA BLACK HS-100) as a carbon material serving as a conductive aid, and 100 parts (containing 2 parts of solid) of an aqueous solution of 2% by weight carboxymethylcellulose and mixed. To the mixer were further added 20 parts of a water-soluble additive 1,3-propanediol, 100 parts of water, and 5 parts of a binder (polytetrafluoroethylene 30-J manufactured by Du Pont-Mitsui Fluorochemicals Company, Ltd., a 60% aqueous dispersion) and mixed. The mixture was adjusted so as to have a final solid content of 31% by weight, so that a secondary cell anode-forming ink composition was obtained. An anode was obtained and evaluated in the same way.

### [Comparative Example 15]

A secondary cell anode-forming ink composition was obtained as in Comparative Example 14', except that the water-soluble additive was not used as shown in Table 2. An anode was also obtained and evaluated as in Comparative Example 14'.

### [Comparative Example 22']

To a mixer were added 47 parts of artificial graphite as an anode active material, 1 part of carbon nanotubes (VGCF-H) as a carbon material serving as a conductive aid, and 25 parts (containing 0.5 parts of solid) of an aqueous solution of 2% by weight hydroxyethyl cellulose and mixed. To the mixer were further added 18 parts of a water-soluble additive PD, 5.25 parts of water, and 3.75 parts of a binder (an aqueous dispersion of 40% styrene-butadiene-based latex (SBR)) and mixed, so that a secondary cell anode-forming ink composition was obtained. An anode was also obtained and evaluated as in Comparative Example 10'.

### [Comparative Example 23]

A secondary cell anode-forming ink composition was obtained using the same procedure as in Comparative Example 22', except that ethanol was used instead as the additive. An anode was also obtained and evaluated as in Comparative Example 10'.

**[Table 2]**

| | Secondary cell anode-forming ink composition | | | Grind gauge (um) | Flexibility | Adhesion | Charge-discharge Cycle Characteristic evaluation |
|---|---|---|---|---|---|---|---|
| | Active material | Carbon Material as conductive aid | Water Soluble additive | | | | |
| Comparative Example 10' | Artificial graphite 48 parts | - | CBA | 30 | ○ | ○ | ○Δ |
| Example 11 | | | MTG | 35 | ○ | ○ | ○Δ |
| Example 12 | Artificial Graphite 47 parts | A 1 part | DMTG | 35 | ○ | ○Δ | ○ |
| Comparative Example 13' | | F 1 part | PEO 800 | 40 | ○Δ | ○Δ | ○Δ |
| Comparative Example 14' | LTO | A | PD | 30 | ○ | ○Δ | ○ |
| Comparative Example 22' | Artificial graphite | C | PD | 40 | ○Δ | ○Δ | ○Δ |
| Comparative Example 11 | Artificial Graphite 48 parts | - | - | 35 | × | × | Δ |
| Comparative Example 12 | | | NMP | 35 | Δ | Δ | Δ |
| Comparative Example | Artificial Graphite 47 parts | A 1 part | - | 40 | Δ | ○Δ | Δ |
| Comparative Example 14 | | F 1 part | Ethanol | 60 | × | × | × |
| Comparative Example 15 | LTO | A | - | 40 | Δ | Δ | Δ |
| Comparative Example 23 | Artificial Graphite | C | Ethanol | 70 | Δ | Δ | Δ |

LTO: Li₄Ti₅O₁₂
A: Acetylene black, DENKA BLACK HS-100 (manufactured by DENKI KAGAKU KOGYO KABUSHIKI KAISHA)
F: Furnace black, Super P-Li (manufactured by TIMCAL GRAPHITE & CARBON)
C: Carbon nanotubes, VGCF-H (manufactured by Showa Denko K.K.)
MTG: Triethylene glycol monomethyl ether
PD: 1,3-propanediol
CBA: Diethylene glycol monoethyl ether acetate
NMP: N-methylpyrrolidone
DMTG: Triethylene glycol dimethyl ether
PEO 800: Polyethylene glycol 800 (having 16 oxygen atoms per molecule, manufactured by Tokyo Chemical Industry Co., Ltd.)

### (Determination of degree of dispersion of secondary cell electrode-forming ink composition and carbon material dispersion for secondary cell electrode)

The degree of dispersion of the secondary cell electrode-forming ink composition and the degree of dispersion of the carbon material dispersion for a secondary cell electrode were determined using a fineness-of-grind gauge (according to JIS K 5600-2-5). Tables 1 and 2 show the evaluation results. In the tables, each numerical value indicates the size of the coarse particles. The smaller value indicates that the degree of dispersion is better and the secondary cell electrode-forming ink composition and the carbon material dispersion for a secondary cell electrode are more uniform.

### (Flexibility of electrode)

Visual observation was performed to determine whether and how the surface of the electrodes prepared as described above was cracked. Tables 1 and 2 show the evaluation results. The less cracks, the better the flexibility. If the electrode have lower flexibility and is more likely to be cracked, it will be difficult to handle in the process of manufacturing the cell, and the composite layer can be chipped during the handling or can be broken or chipped during the charge and discharge of the cell, which is accompanied by the expansion and contraction of the active material. Therefore, the electrode should have higher flexibility.
○: No cracking (practically acceptable level)
○Δ: Cracking is infrequently observed (insufficient but workable level)
Δ: Cracks are observed in some parts.
×: Cracks are observed over the whole.

### (Adhesion of electrode)

A lattice pattern with six cuts in each direction at intervals of 2 mm was made in each prepared electrode, in which each cut was made with a depth from the surface of the electrode to the collector using a knife. A pressure-sensitive adhesive tape was attached to the cuts and then immediately peeled off when visual evaluation was performed to determine whether and how the active material was removed. Tables 1 and 2 show the evaluation results. The evaluation criteria are shown below.
○: Nothing is removed (practically acceptable level).
○Δ: Only a small part is removed (insufficient but workable level).
Δ: About half is removed.
×: Almost the whole is removed.

### (Charge-discharge cycle characteristics)

The resulting coin-shaped batteries were subjected to charge-discharge measurement using a charge-discharge system (SM-8 manufactured by HOKUTO DENKO CORPORATION). The better the charge-discharge cycle characteristics, the longer the cell life.

When the active material used was LiFePO₄, the following process was performed. Constant current charge with a charge current of 1.0 mA (corresponding to 0.2 C) was performed until a charge end voltage of 4.2 V was reached. After the voltage of the cell reached 4.2 V, constant current discharge with a discharge current of 2.5 mA was performed until a discharge end voltage of 2.0 V was reached. This charge-discharge process was performed as one cycle, and 100 cycles of this process were performed. The initial discharge capacity was defined as the discharge capacity at the third cycle (the initial discharge capacity was normalized as a discharge capacity retention of 100%). The discharge capacity retention after the 100 cycles was calculated (the closer to 100% the better). Tables 1 and 2 show the evaluation results.
○: The retention is at least 95% (excellent).
○Δ: The retention is from 90% to less than 95% (good).
Δ: The retention is from 85% to less than 90% (insufficient but workable level).
×: The retention is less than 85% (practically unacceptable or not workable).

When the active material used is LiCoO₂, the charge-discharge cycle characteristics can be measured as in the case of LiFePO₄, except that the charge current, the charge end voltage, the discharge current, and the discharge end voltage are 1.6 mA (corresponding to 0.2 C), 4.3 V, 4.0 mA, and 2.8 V, respectively.

When the active material used is LiNi1/3Mn1/3Co1/3O₂, the charge-discharge cycle characteristics can be measured as in the case of LiFePO₄, except that the charge current, the charge end voltage, the discharge current, and the discharge end voltage are 1.9 mA (corresponding to 0.2 C), 4.3 V, 4.8 mA, and 3.0 V, respectively.

When the active material used is LiMn₂O₄, the charge-discharge cycle characteristics can be measured as in the case of LiFePO₄, except that the charge current, the charge end voltage, the discharge current, and the discharge end voltage are 1.0 mA (corresponding to 0.2 C), 4.3 V, 2.5 mA, and 3.0 V, respectively.

When artificial graphite is used as the active material for the anode, the charge-discharge cycle characteristics can be measured as in the case of LiFePO₄, except that the charge current, the charge end voltage, the discharge current, and the discharge end voltage are 1.8 mA (corresponding to 0.2 C), 0.1 V, 1.8 mA, and 2.0 V, respectively.

When the active material used is Li₄Ti₅O₁₂, the charge-discharge cycle characteristics can be measured as in the case of LiFePO₄, except that the charge current, the charge end voltage, the discharge current, and the discharge end voltage are 1.0 mA (corresponding to 0.2 C), 1.0 V, 2.5 mA, and 2.0 V, respectively.

As shown in Tables 1 and 2, when the secondary cell electrode-forming ink composition of the present invention is used, the resulting electrode has good flexibility and good adhesion, and the resulting cell characteristics are such that the reduction in discharge capacity is kept smaller after 100 cycles of the charge-discharge process, and this would be because the good flexibility and adhesion of the electrode make it possible to prevent electrode delamination and breakage of the electrode structure when the active material expands or contracts upon intercalation or deintercalation with lithium ions during the charge-discharge process.

The good flexibility and adhesion of the resulting electrode would be because of the two points described below. As for the first point, the water-soluble additive according to the present invention can reduce the surface tension of the ink composition, so that curing-induced shrinkage of the ink composition could be reduced during drying, although the detain is not clear. If the ink composition coating is cracked due to curing-induced shrinkage during drying, the uniform conductive network can be broken in the resulting electrode, so that the conductivity may decrease. In addition, curing-induced shrinkage during drying may degrade the adhesion to the collector. Therefore, the use of the water-soluble additive according to the present invention could improve the adhesion.

As for the second point, the water-soluble additive does not decrease the dispersibility of the active material or the carbon material as the conductive aid in the ink composition. The examples and the comparative examples show that when the dispersion of the active material or the carbon material as the conductive aid is insufficiently controlled, the charge-discharge cycle characteristics tend to decrease. If the dispersion in the ink composition is insufficiently controlled, a uniform conductive network may fail to be formed in the resulting electrode for charge-discharge characteristics, so that partial aggregation may cause a certain resistance distribution in the electrode, which may cause current concentration in the cell during use and thus promote degradation. The use of an alcohol having a single oxygen atom per molecule seems to decrease the dispersibility in the ink composition because of the low compatibility of the alcohol with water. On the other hand, polyethylene glycols having 21 or more oxygen atoms per molecule probably have low compatibility with the active material or the carbon material as the conductive aid and thus could decrease the dispersibility in the ink composition, although they are compatible with water.

Therefore, it is concluded that the water-soluble additive according to the present invention can satisfy these two points, so that the resulting ink composition can form an electrode with good flexibility and good adhesion and can also form a cell with good charge-discharge cycle characteristics.

### [Example 15]

To a mixer were added 10 parts of acetylene black (DENKA BLACK HS-100) as a carbon material serving as a conductive aid and 50 parts (containing 1 part of solid) of an aqueous solution of 2% by weight carboxymethylcellulose and mixed. To the mixer were further added 7 parts of a water-soluble additive MTG, 40 parts of water, and 3 parts of a binder (polytetrafluoroethylene 30-J manufactured by Du Pont-Mitsui Fluorochemicals Company, Ltd., a 60% aqueous dispersion) and mixed to adjust the viscosity, so that a secondary cell electrode underlayer-forming composition was obtained.

The underlayer-forming composition was applied to a 20-µm-thick aluminum foil as a collector using a doctor blade. The composition was then dried by heating to form a 5-µm-thick underlayer.

### [Comparative Example 16'] and [Comparative Examples 16 and 17]

Secondary cell electrode underlayer-forming compositions were obtained as in Example 15, except that the carbon material as a conductive aid and the water-soluble additive were used as shown in Table 3, and the evaluation was performed in the same way.

**[Table 3]**

| | Secondary cell electrode underlayer-forming composition | | Grind gauge |
|---|---|---|---|
| | Carbon Material as conductive aid | Water Soluble additive | |
| Example 15 | A | MTG | 30 |
| Comparative Example 16' | F | PD | 35 |
| Comparative Example 16 | A | - | 35 |
| Comparative Example 17 | F | n-butanol | 60 |

### [Example 17]

The secondary cell cathode-forming ink composition of Comparative Example 3' was applied to the underlayer prepared in Example 15 and then dried by heating under reduced pressure to form a cathode, which was evaluated.

### [Comparative Example 18' and Comparative Examples 18 and 19]

A cathode or an anode was obtained and evaluated as in Example 17, except that the secondary cell electrode-forming ink composition shown in Table 4 was applied and then dried by heating under reduced pressure.

**[Table 4]**

| | Secondary cell electrode-forming ink composition | | Flexibility | Adhesion | Charge-discharge Cycle Characteristic evaluation |
|---|---|---|---|---|---|
| Example 17 | Underlayer | Example 15 | ○ | ○ | ○ |
| | Cathode-forming composition | Comparative Example 3' | | | |
| Comparative Example 18' | Underlayer | Comparative Example 16' | ○ | ○ | ○ |
| | Anode-forming composition | Comparative Example 12 | | | |
| Comparative Example 18 | Underlayer | Comparative Example 15 | Δ | Δ | Δ |
| | Cathode-forming composition | Comparative Example 3 ' | | | |
| Comparative Example 19 | Underlayer | Comparative Example 16 | × | × | × |
| | Anode-forming composition | Comparative Example 12 | | | |

It is apparent that when the secondary cell electrode-forming composition of the present invention is used to form the underlayer, the evaluation results are better than those in Comparative Example 3' or Comparative Example 12 where no underlayer is used. This would be because the secondary cell electrode-forming composition of the present invention can make more uniform and stronger the adhesion part between the collector and the composite layer. However, the evaluation results in Comparative Example 18 or 19 were inferior to those in Comparative Example 3' or Comparative Example 12 even though the electrode was produced with a secondary cell electrode underlayer-forming composition in Comparative Example 18 or 19. This would be because the adhesion between the collector and the composite layer was made rather insufficient so that the resulting electrode was less uniform than that produced with no underlayer.

## Claims

1. A secondary cell electrode-forming composition including: at least one of A) an electrode active material or B) a carbon material as a conductive aid; C) a water-soluble additive; and D) water,
**characterized in that** the water-soluble additive C) is selected from the group consisting of:
triethylene glycol monomethyl ether, diethylene glycol dimethyl ether, diethylene glycol diethyl ether, diethylene glycol ethyl methyl ether, diethylene glycol butyl methyl ether, dipropylene glycol dimethyl ether, triethylene glycol monoethyl ether, triethylene glycol monopropyl ether, triethylene glycol monobutyl ether, triethylene glycol dimethyl ether, triethylene glycol butyl methyl ether, tripropylene glycol monomethyl ether, tripropylene glycol dimethyl ether, tetraethylene glycol monomethyl ether, tetraethylene glycol monobutyl ether, tetraethylene glycol dimethyl ether.

2. The secondary cell electrode-forming composition according to Claim 1, wherein the composition contains 0.1 to 30% by weight of the water-soluble additive C).

3. An electrode for use in a secondary cell, wherein the electrode includes a collector; and at least one of a composite layer or an electrode underlayer made from the secondary cell electrode-forming composition according to any one of Claims 1 and 2.

4. A secondary cell including a cathode; an anode; and an electrolytic solution, wherein at least one of the cathode or the anode is the electrode for use in a secondary cell according to Claim 3.

## Patentansprüche

1. Eine Zusammensetzung zur Bildung einer Sekundärzellenelektrode umfassend: mindestens eines von A) ein aktives Elektrodenmaterial oder B) ein Kohlenstoffmaterial als leitfähiges Hilfsmittel; C) ein wasserlösliches Additiv; und D) Wasser,
**dadurch gekennzeichnet, dass** das wasserlösliche Additiv C) ausgewählt ist aus der Gruppe bestehend aus:
Triethylenglykolmonomethylether, Diethylenglykoldimethylether, Diethylenglykoldiethylether, Diethylenglykolethylmethylether, Diethylenglykolbutylmethylether, Dipropylenglykoldimethylether, Triethylenglykolmonoethylether, Triethylenglykolmonopropylether, Triethylenglykolmonobutylether, Triethylenglykoldimethylether, Triethylenglykolbutylmethylether, Tripropylenglykolmonomethylether, Tripropylenglykoldimethylether, Tetraethylenglykolmonomethylether, Tetraethylenglykolmonobutylether, Tetraethylenglykoldimethylether.

2. Die Zusammensetzung zur Bildung einer Sekundärzellenelektrode nach Anspruch 1, wobei die Zusammensetzung 0,1 bis 30 Gew.-% des wasserlöslichen Additivs C) enthält.

3. Eine Elektrode zur Verwendung in einer Sekundärzelle, wobei die Elektrode einen Kollektor; und mindestens eine Verbundschicht oder eine Elektrodenunterschicht hergestellt aus der Zusammensetzung zur Bildung einer Sekundärzellenelektrode nach einem der Ansprüche 1 und 2 umfasst.

4. Eine Sekundärzelle umfassend eine Kathode; eine Anode; und eine Elektrolytlösung, wobei mindestens eine, die Kathode oder die Anode, die Elektrode zur Verwendung in einer Sekundärzelle nach Anspruch 3 ist.

## Revendications

1. Une composition de formation d'électrode de pile rechargeable comprenant : au moins un parmi A) un matériau actif d'électrode ou B) un matériau de carbone en tant qu'adjuvant conducteur ; C) un additif soluble dans l'eau ; et D) de l'eau,
**caractérisée en ce que** l'additif soluble dans l'eau C) est choisi dans le groupe constitué par :
éther monométhylique du triéthylèneglycol, éther diméthylique du diéthylèneglycol, éther diéthylique du diéthylèneglycol, éther méthyléthylique du diéthylèneglycol, éther méthylbutylique du diéthylèneglycol, éther diméthylique du dipropylèneglycol, éther monoéthylique du triéthylèneglycol, éther monopropylique du triéthylèneglycol, éther monobutylique du triéthylèneglycol, éther diméthylique du triéthylèneglycol, éther méthylbutylique du triéthylèneglycol, éther monométhylique du tripropylèneglycol, éther diméthylique du tripropylèneglycol, éther monométhylique du tétraéthylèneglycol, éther monobutylique du tétraéthylèneglycol, éther diméthylique du tétraéthylèneglycol.

2. La composition de formation d'électrode de pile rechargeable selon la revendication 1, où la composition contient de 0,1 à 30 % en poids de l'additif soluble dans l'eau C).

3. Une électrode destinée à être utilisée dans une pile rechargeable, où l'électrode comprend un collecteur ; et au moins l'une parmi une couche composite ou une sous-couche d'électrode fabriquée à partir de la composition de formation d'électrode de pile rechargeable selon la revendication 1 ou 2.

4. Une pile rechargeable comprenant une cathode ; une anode ; et une solution électrolytique, où au moins l'une de la cathode ou de l'anode est l'électrode destinée à être utilisée dans une pile rechargeable selon la revendication 3.
